# EUROPEAN PATENT SPECIFICATION

(11) **EP 0 477 645 B1**
(45) Date of publication and mention of the grant of the patent: **10.12.1997**
(21) Application number: 91115212.2
(22) Date of filing: 09.09.1991
(51) Int. Cl.: B60G 13/00, B60G 15/07

(54) **Procedure for constructing a support for the front wheel suspension of a motor vehicle**
Konstruktionsverfahren für eine Vorderradaufhängungsstütze eines Kraftfahrzeuges
Méthode pour construire un support de la suspension de roue avant d'un véhicule automobile

(30) Priority: 25.09.1990 IT 6771590
(43) Date of publication of application: 01.04.1992
(73) Proprietor: FIAT AUTO S.p.A., 10135 Torino (IT)
(72) Inventor: Ravizza, Renato, I-10024 Moncalieri (IT)
(74) Representative: Boggio, Luigi

(56) References cited:
- EP-A- 0 108 041
- EP-A- 0 332 915
- FR-A- 2 472 487
- FR-A- 2 519 588
- GB-A- 2 020 235
- GB-A- 2 026 404
- US-A- 4 761 018

## Description

The present invention refers to a procedure for constructing a support for the front wheel suspension of a motor vehicle of the type substantially comprising a seat capable of housing the stub axle bearings and a plate capable of supporting the disc brake calipers.

A support of this type is usually made by casting, normally in cast iron, an appropriate semi-finished part on which finishing operations are then carried out in particular to obtain the said seat for housing the bearings. The plate supporting the disc brake calipers is normally bolted to this said semi-finished part.

This procedure is rather complex, requiring numerous stages of work and supports thus obtained are heavy and costly.

On the basis of a second procedure, the support is obtained by attaching to a sheet metal support arm, constructed by operations of plastic deformation, an appropriate plate capable of supporting the disc brake calipers, which is also obtained by means of plastic deformation. To this support arm is then fixed, normally by bolts, the flange of the outer ring of a special type of rolling-contact bearing. The inner and outer rings of this bearing are provided with flanges one of which is fixed to the disc brake and the rim and the other to the said support arm. Supports obtained with this procedure are costly as a complex bearing specially designed for this purpose must be used.

On the basis of a further procedure the support arm, plate for supporting the disc brake calipers and bush for supporting the stub axle bearings are constructed separately. These parts are then joined together by arc welding. Supports obtained with this procedure are not very accurately formed or dimensioned due to the significant deformation which they have undergone during arc welding; in fact this welding procedure in particular heats the parts to be joined together, deforming them and causing abnormal stresses in them. Furthermore, supports produced with this procedure normally require further machining to obtain the form and dimensions of the design.

Merely replacing arc welding with a low thermal dispersion welding, e.g. laser welding as taught in EP-A-0 332 915, does not solve these problems.

An aim of the present invention is to create a procedure for constructing a support for the front wheel suspension of a motor vehicle by which the inconveniences mentioned can be eliminated and hence, in particular, a support having a very simple structure and reduced weight and size can be produced, the shape and dimensions of which strictly correspond with those of the design.

These aims are achieved by a procedure for constructing a support for the front wheel suspension of a motor vehicle as claimed in Claim 1.

For a better understanding the procedure of the present invention, a description is now given, by way of example, of the basic stages thereof with reference to the appended figures in which:
figure 1 represents a section of the support constructed with the procedure of the invention, on which the front stub axle of a motor vehicle is mounted.
figure 2 represents a vertical section through a support constructed with the procedure of the invention;
figures 3 to 7 represent sections through assemblies obtained by attaching some parts of the support together during various stages of the procedure of the invention;
figure 9 represents a section of another support obtained with the procedure of the invention which differs from that of figure 2 by the form of the plate for supporting the disc brake calipers.

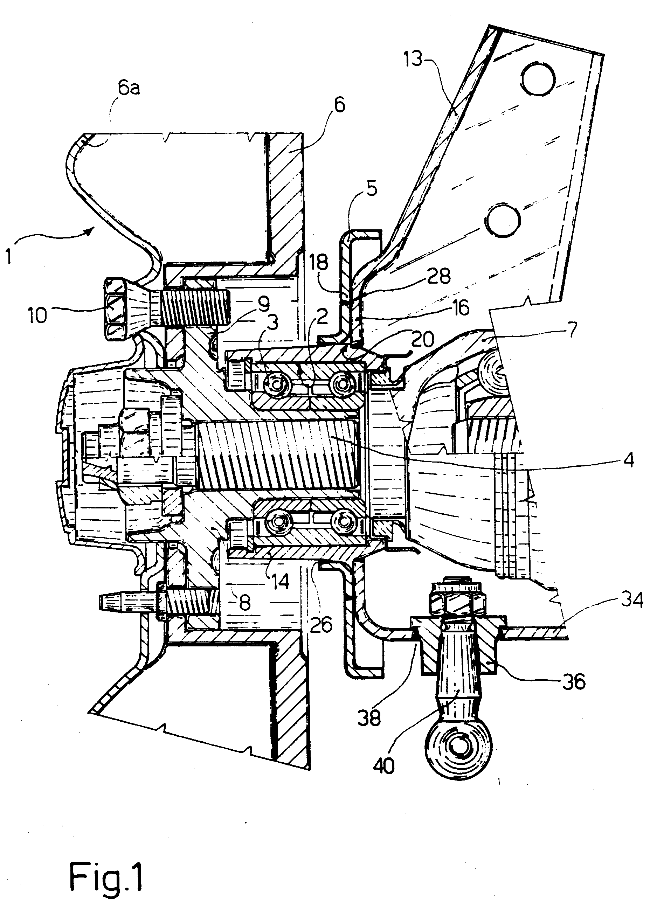

The procedure of the invention is intended for the construction of a support for the suspension of the front wheel (1) (figure 1) of a motor vehicle. As is known, a support of this type substantially comprises a seat 2 capable of supporting the bearings 3 of a stub axle 4 of wheel 1, and a plate 5 capable of supporting the caliper (not shown) of a disc brake, the disc 6 of which, fixed to the wheel 1, is visible in figure 1.

As figure 1 clearly shows, the stub axle 4 is integral with the cup 7 of a spherical homocentric coupling and is attached, by means of a splined coupling, to a sleeve 8 provided with a flange 9 to which the disc 6 and rim 6a of the wheel 1 are fixed by bolts 10.

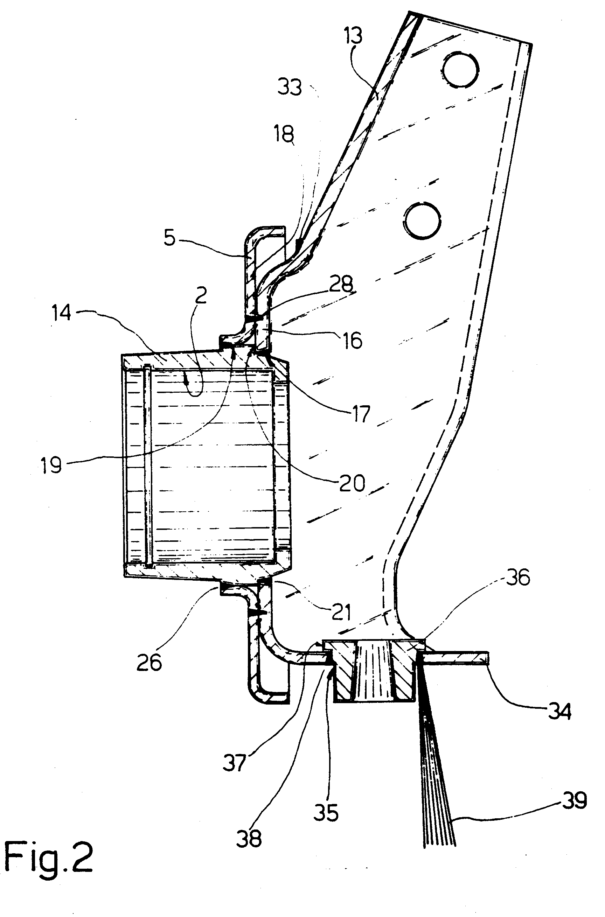

As is clearly seen in figure 2, which represents a vertical section through a support obtained with the procedure of the invention, it substantially comprises a support arm 13 the upper end of which is capable of being attached to the suspension of the vehicle, a plate 14, a plate 5, and a bush 14 inside of which is obtained seat 2 aforementioned.

On the basis of the procedure, arm 13 is constructed of sheet metal by operations of plastic deformation. Substantially it comprises a first substantially flat wall portion 16 in which is obtained a first hole 17. Plate 5 is also made of sheet metal by operations of plastic deformation and has a second flat surface portion 18 in which a hole 19 is obtained.

Bush 14 is obtained by extrusion or routing (or a combination of these processes) and has, on its outer surface, portions with a diameter less than that of holes 17 and 19, so that it can be inserted at least partially inside them, as shown clearly in figure 2.

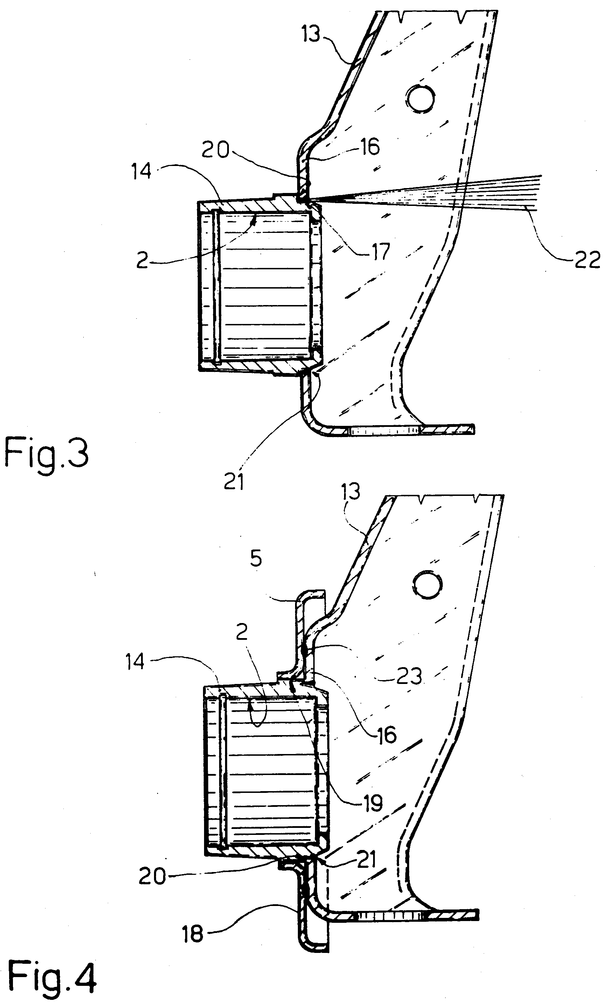

Bush 14 is inserted in hole 17 of support arm 13 as shown in figure 3. Conveniently, the bush is provided with an annular shoulder 20 against which flat wall portion 16 rests. Then the bush is fixed to arm 13 by a weld bead 21 obtained with a laser beam 22.

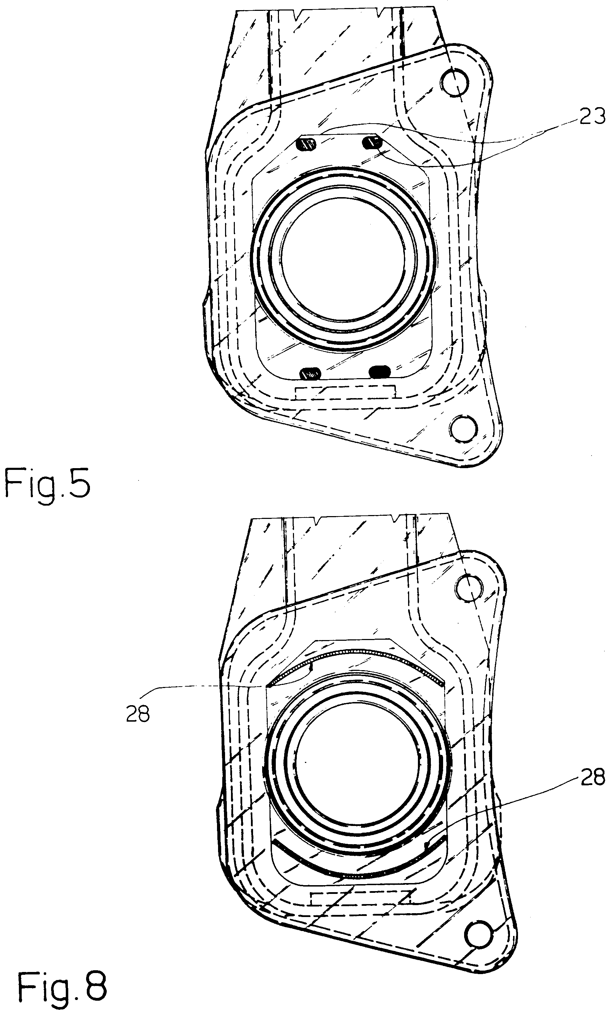

The flat wall portion 18 of plate 5 is then brought into contact with flat wall portion 16 of arm 13, as is clearly shown in figure 4. In this configuration hole 19 in plate 5 is coupled with the outer surface of bush 14. To position the plate correctly with respect to the arm, it is welded to the latter by weld zones 23 having a small area. Conveniently, the aforementioned zones are comprised of a small number of spot welds obtained by projection welding. Zones 23 thus obtained can be arranged or positioned as shown diagramatically in figure 5, in which plate 5 and support arm 13 are shown in a front view.

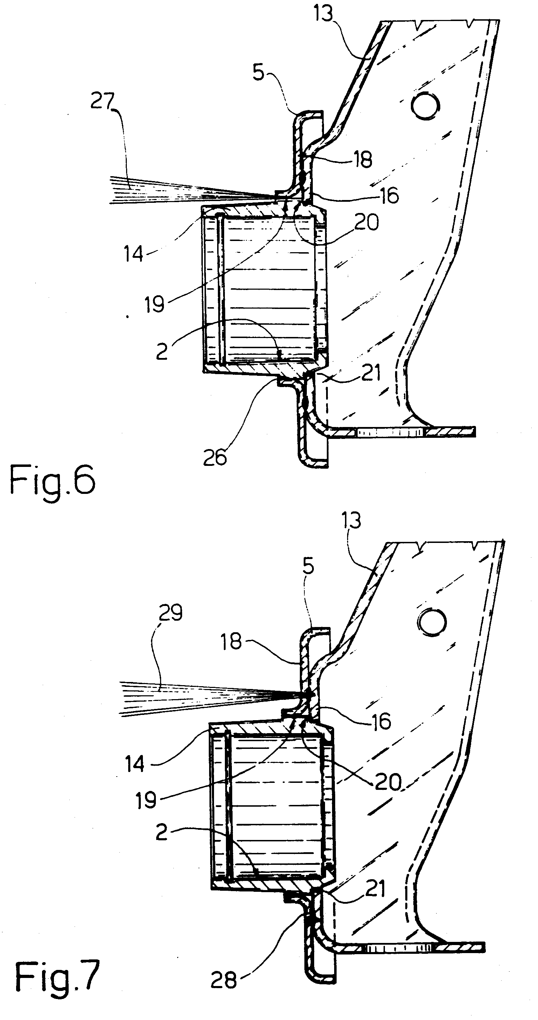

Then, another weld bead 26 (figure 6) is formed between the outer surface of bush 14 and the inner surface of hole 19 in plate 5; this second weld bead being obtained by laser beam 27.

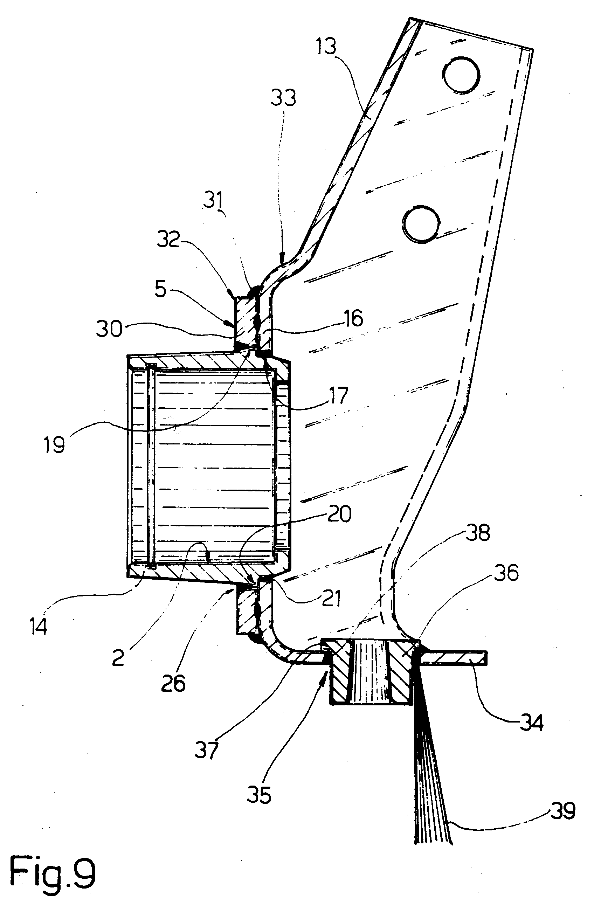

Plate 5 is also fixed to support arm 13 by a weld bead which, in the embodiment of the procedure illustrated in figure 7, is indicated with 28. On the basis of this embodiment of the procedure, the said bead is formed by means of a laser beam 29, which is directed on to the substantially flat portion of wall 16 of plate 5 so as to further cause localised fusion of the underlying portion of flat surface 18. In this way for example two weld beads 28 (figure 8) can be obtained in a position symmetrical to the axes of holes 17 and 19.

With the procedure described, a support is therefore obtained as shown in figure 2, in which bush 14 is fixed to arm 13 by a weld bead 21 and is fixed to plate 5 by a weld bead 26, and plate 5 is fixed to the support by weld bead 28. In this way a structure is obtained with a very high mechanical resistance, in which the various components (arm 13, plate 5 and bush 14) do not undergo deformation or distortion during the laser welding procedure. Thus the shape and dimensions of the support are strictly in correspondence with the design.

The procedure of the invention can also be used to obtain a support like that of figure 9, which is provided with a plate 5 having a slightly different structure from that of figure 2. In fact, it is much thicker than the plate of the preceding figure and substantially comprises an annular part 30 from which project two arms (not shown) capable of supporting the disc brake calipers. Such a plate can be obtained from sheet metal by means of a simple stamping operation, or can be constructed in any other known manner. To obtain the support of figure 9, all of the stages first described with reference to figure 2 are followed, with the exception of that with which weld bead 23 (figure 4) is formed. In fact, this weld bead, which, as has been stated, has the function of fixing plate 5 to support arm 13, is substituted by weld bead 31 (fig. 9) which is formed between the outer edge 32 of annular part 30 of plate 5 and the outer surface 33 of support arm 13. Weld bead 31 is produced by arc welding. During the stage in which weld bead 31 is formed, no substantial deformations are induced in the various parts of the support because of the position of the said bead, which can be continuous or preferably comprised of short sections.

On the basis of the procedure of the invention, conveniently, but not necessarily, support arm 13 is formed so as to obtain thereon a further flat surface portion 34, substantially orthogonal to flat surface portion 18, and therein is obtained a hole 35, inside of which is inserted a sleeve 36 provided with an annular projection 37 capable of resting on the said wall.

On the basis of the procedure of the invention, sleeve 36 is fixed to support arm 13 by a weld bead 38 obtained by a laser beam 39.

It is evident that modifications can be made to the stages of the procedure described without exceeding the scope of the invention as defined by the appended claims.

## Claims

1. A procedure for constructing a support for the front wheel suspension of a motor vehicle, said support comprising a seat (2) capable of supporting the bearings of the stub axle (4) of the said wheel and a plate (5) capable of supporting the disc brake calipers, wherein:
- by operations of plastic deformation, a sheet metal arm is formed capable of being fixed to said suspension and in which is obtained a first hole(17);
- by operations of plastic deformation, a plate (5) is formed capable of supporting the disc brake calipers; and
- a bush (14) is formed able to receive the bearings of the stub axle (4); said elements being then welded together;
characterised by the fact that:
(a)- said sheet metal arm (13) is provided with a first substantially flat wall portion (16) through which said hole (17) is obtained;
(b)- said plate (5) is provided with a second flat surface portion (18) in which is obtained a second hole (19); and
(c)- said bush (14) is formed already provided with said seat (2) for the bearings of said stub axle (4), the outer surface of said bush having a portion with a diameter less than that of said holes and on said outer surface of said bush (14) being obtained an annular shoulder (20) capable of positioning the bush on the support;
(d)- said procedure comprising: a first stage of inserting said bush (14) in said first hole (17) and forming, by laser welding and against said shoulder (20), at least a first weld bead (21) between said bush (14) and said support arm (13); a second stage of bringing into contact said second wall portion (18) of said plate (5) with said first wail portion (16) of the support arm and forming, by laser welding, at least a second weld bead (26) between said bush (14) and said plate (5); and a third stage of forming, by welding, at least a third weld bead (28,31) between said plate and said support arm.

2. A procedure according to claim 1, characterised by the fact that it comprises a fourth stage which is carried out after said first stage and by means of which said plate (5) is projection welded to said support arm (13) by a zone of welding (23) of very limited area, in order to position the plate correctly against the support arm during said second stage.

3. A procedure according to Claim 1 or 2, characterised by the fact that said first weld bead (21) is formed between said outer surface of said bush and the surface of said hole (17) of the support arm(13).

4. A procedure according to any of the foregoing claims, characterised by the fact that said second weld bead (26) is formed between said outer surface of said bush (14) and the surface of said hole (19) of plate (5).

5. A procedure according to one of the foregoing claims, characterised by the fact that during said third stage said plate (5) is fixed to said support arm (13) by laser welding.

6. A procedure according to claim 5, characterised by the fact that said third weld bead (28) which is produced during said third stage is obtained by causing the fusion of the material of prefixed zones of said substantially flat wall portions (16,18) of said plate (5) and of said support arm (13).

7. A procedure according to claims 1 to 4, characterised by the fact that during said third stage, said plate (5) is fixed to said support (13) by arc welding.

8. A procedure according to claim 7, characterised by the fact that said third weld bead (31) which is produced in said third stage is formed between parts of the peripheral edge (32) of said plate (5) and the surface (33) of said support arm (13) which faces said plate.

9. A procedure according to any of claims 2 to 8, characterised by the fact that said weld zones (23) produced in said fourth stage are positioned between said substantially flat wall portions (16,18) of said plate (5) and of said support arm (13).

10. A procedure according to one of the foregoing claims, characterised by the fact that said support arm (13) is formed in a manner to obtain a flat wall portion (34) provided with a hole (35) and substantially orthogonal to said first flat wall portion (16), in said hole (35) being inserted a sleeve(36) capable of supporting a link pin (40) connecting with the steering linkage of the vehicle, said sleeve (36) being provided with an annular projection (37) capable of resting on said flat wall portion (34) and being fixed to said wall portion by means of a weld bead (38) obtained by laser welding.

## Patentansprüche

1. Verfahren zum Konstruieren eines Trägers für die Vorderradaufhängung eines Kraftfahrzeugs, wobei der Träger einen Sitz (2), der die Lager des Achsschenkels (4) des Rades trägt, sowie eine Platte (5), die die Scheibenbremssättel trägt, enthält, wobei:
- durch Ausführen einer plastischen Verformung ein Blecharm gebildet wird, der an der Aufhängung befestigt werden kann und in dem ein erstes Loch (17) erhalten wird;
- durch Ausführen einer plastischen Verformung eine Platte (5) gebildet wird, die die Scheibenbremssättel tragen kann; und
- eine Hülse (14) gebildet wird, die die Lager des Achsschenkels (4) aufnehmen kann; wobei die Elemente dann miteinander verschweißt werden,
dadurch gekennzeichnet, daß:
(a) der Blecharm (13) mit einem ersten, im wesentlichen flachen Wandabschnitt (16) versehen ist, durch den hindurch das Loch (17) erhalten wird;
(b) die Platte (5) mit einem zweiten flachen Oberflächenabschnitt (18) versehen ist, in dem ein zweites Loch (19) erhalten wird; und
(c) die Buchse (14) bei ihrer Bildung bereits mit dem Sitz (2) für die Lager des Achsschenkels (4) versehen ist, wobei die äußere Oberfläche der Buchse einen Abschnitt mit einem Durchmesser besitzt, der kleiner als derjenige der Löcher ist, und auf der äußeren Oberfläche der Buchse (14) eine ringförmige Schulter (20) erhalten wird, mit der die Buchse am Träger positioniert werden kann;
(d) das Verfahren enthält: eine erste Stufe des Einsetzens der Buchse (14) in das erste Loch (17) und des Bildens wenigstens einer ersten Schweißraupe (21) an der Schulter (20) zwischen der Buchse (14) und dem Trägerarm (13) mittels Laserschweißens; eine zweite Stufe des Herstellens eines Kontakts zwischen dem zweiten Wandabschnitt (18) der Platte (5) und dem ersten Wandabschnitt (16) des Trägerarms und des Bildens wenigstens einer zweiten Schweißraupe (26) zwischen der Buchse (14) und der Platte (5) mittels Laserschweißens; und eine dritte Stufe des Bildens wenigstens einer dritten Schweißraupe (28, 30) zwischen der Platte und dem Trägerarm mittels Schweißens.

2. Verfahren nach Anspruch 1, dadurch gekennzeichnet, daß es eine vierte Stufe enthält, die nach der ersten Stufe ausgeführt wird und mittels derer die Platte (5) am Trägerarm (13) in einer Schweißzone (33) mit sehr begrenzter Fläche buckelverschweißt wird, um die Platte während der zweiten Stufe korrekt am Trägerarm zu positionieren.

3. Verfahren nach Anspruch 1 oder 2, dadurch gekennzeichnet, daß die erste Schweißraupe (21) zwischen der äußeren Oberfläche der Buchse und der Oberfläche des Lochs (17) des Trägerarms (13) gebildet wird.

4. Verfahren nach irgendeinem der vorangehenden Ansprüche, dadurch gekennzeichnet, daß die zweite Schweißraupe (26) zwischen der äußeren Oberfläche der Buchse (14) und der Oberfläche des Lochs (19) der Platte (5) gebildet wird.

5. Verfahren nach irgendeinem der vorangehenden Ansprüche, dadurch gekennzeichnet, daß während der dritten Stufe die Platte (5) am Trägerarm (13) mittels Laserschweißens befestigt wird.

6. Verfahren nach Anspruch 5, dadurch gekennzeichnet, daß die dritte Schweißraupe (28), die während der dritten Stufe hergestellt wird, dadurch erhalten wird, daß das Material von im voraus befestigten Zonen der im wesentlichen flachen Wandabschnitte (16, 18) der Platte (5) und des Trägerarms (13) zum Schmelzen gebracht wird.

7. Verfahren nach den Ansprüchen 1 bis 4, dadurch gekennzeichnet, daß während der dritten Stufe die Platte (5) am Träger (13) mittels Bogenschweißens befestigt wird.

8. Verfahren nach Anspruch 7, dadurch gekennzeichnet, daß die dritte Schweißraupe (31), die in der dritten Stufe hergestellt wird, zwischen Teilen der Umfangskante (32) der Platte (5) und der Oberfläche (33) des Trägerarms (13), die der Platte zugewandt ist, gebildet wird.

9. Verfahren nach irgendeinem der Ansprüche 2 bis 8, dadurch gekennzeichnet, daß die Schweißzonen (23), die in der vierten Stufe erzeugt werden, zwischen den im wesentlichen flachen Wandabschnitten (16, 18) der Platte (5) und dem Trägerarm (13) positioniert werden.

10. Verfahren nach irgendeinem der vorangehenden Ansprüche, dadurch gekennzeichnet, daß der Trägerarm (13) in einer Weise gebildet wird, in der ein mit einem Loch (35) versehener flacher Wandabschnitt, der zum ersten flachen Wandabschnitt (16) im wesentlichen senkrecht ist, erhalten wird, wobei in das Loch (35) eine Hülse (36) eingesetzt wird, die einen Verbindungsstift (40) tragen kann, der eine Verbindung mit dem Lenkgestänge des Fahrzeugs herstellt, wobei die Hülse (36) mit einem ringförmigen Vorsprung (37) versehen ist, der auf dem flachen Wandabschnitt (34) aufruht und am Wandabschnitt durch eine mittels Laserschweißens erhaltene Schweißraupe (38) befestigt ist.

## Revendications

1. Une méthode pour construire un support de la suspension de roue avant d'un véhicule automobile, ledit support comprenant un logement (2) capable de recevoir les paliers de l'essieu à chapes fermées (4) de ladite roue et une plaque (5) capable de supporter les étriers des freins à disque, dans laquelle :
- un bras en tôle est formé par opérations de déformation plastique, qui peut être fixé à ladite suspension et dans lequel un premier trou (17) est réalisé ;
- une plaque (5) est formée par opérations de déformation plastique, capable de supporter les étriers des freins à disque ; et
- un manchon (14) est formé, capable de recevoir les paliers de l'essieu à chapes fermées (4) ; lesdits éléments étant ensuite soudés ensemble ;
caractérisée par le fait que :
(a)- ledit bras en tôle (13) est équipé d'une première partie de paroi essentiellement plane (16) à travers laquelle ledit trou (17) est réalisé ;
(b)- ladite plaque (5) est équipée d'une seconde partie de surface plane (18) dans laquelle un second trou (19) est réalisé ; et
(c)- ledit manchon (14) est formé déjà équipé dudit logement (2) pour les paliers dudit essieu à chapes fermées (4), la surface extérieure dudit manchon ayant une partie présentant un diamètre inférieur à celui desdits trous et un épaulement annulaire (20) étant réalisé sur ladite surface extérieure dudit manchon (14) permettant de positionner le manchon sur le support ;
(d)- ladite méthode comprenant : une première phase d'insertion dudit manchon (14) dans ledit premier trou (17) et de réalisation, par soudage au laser et contre ledit épaulement (20), d'au moins une première perle de soudure (21) entre ledit manchon (14) et ledit bras de support (13) ; une deuxième phase de mise en contact de ladite seconde partie de paroi (18) de ladite plaque (5) avec ladite première partie de paroi (16) du bras de support et de réalisation, par soudage au laser, d'au moins une deuxième perle de soudure (26) entre ledit manchon (14) et ladite plaque (5) ; et une troisième phase de réalisation, par soudage, d'au moins une troisième perle de soudure (28, 31) entre ladite plaque et ledit bras de support.

2. Une méthode selon la revendication 1, caractérisée par le fait qu'elle comprend une quatrième phase qui est effectuée après ladite première phase et au moyen de laquelle ladite plaque (5) est soudée par bossages sur ledit bras de support (13) par une zone de soudage (23) d'une surface très limitée, afin de positionner la plaque correctement contre le bras de support pendant ladite deuxième phase.

3. Une méthode selon la revendication 1 ou 2, caractérisée par le fait que ladite première perle de soudure (21) est formée entre ladite surface extérieure dudit manchon et la surface dudit trou (17) du bras de support (13).

4. Une méthode selon l'une ou l'autre des revendications précédentes, caractérisée par le fait que ladite deuxième perle de soudure (26) est formée entre ladite surface extérieure dudit manchon (14) et la surface dudit trou (19) de la plaque (5).

5. Une méthode selon l'une ou l'autre des revendications précédentes, caractérisée par le fait que pendant ladite troisième phase ladite plaque (5) est fixée audit bras de support (13) par soudage au laser.

6. Une méthode selon la revendication 5, caractérisée par le fait que ladite troisième perle de soudure (28) qui est produite pendant ladite troisième phase est obtenue en provoquant la fusion de la matière des zones préfixées desdites parties de paroi essentiellement planes (16, 18) de ladite plaque (5) et dudit bras de support (13).

7. Une méthode selon les revendications 1 à 4, caractérisée par le fait que pendant ladite troisième phase, ladite plaque (5) est fixée audit support (13) par soudage à l'arc.

8. Une méthode selon la revendication 7, caractérisée par le fait que ladite troisième perle de soudure (31) qui est produite dans ladite troisième phase est formée entre les parties du bord périphérique (32) de ladite plaque (5) et la surface (33) dudit bras de support (13) qui fait face à ladite plaque.

9. Une méthode selon l'une ou l'autre des revendications 2 à 8, caractérisée par le fait que lesdites zones de soudure (23) produites dans ladite quatrième phase sont positionnées entre lesdites parties de paroi essentiellement planes (16, 18) de ladite plaque (5) et dudit bras de support (13).

10. Une méthode selon l'une des revendications précédentes, caractérisée par le fait que ledit bras de support (13) est formé de manière à obtenir une partie de paroi plane (34) équipée d'un trou (35) et essentiellement orthogonale à ladite première partie de paroi plane (16), un manchon (36) étant introduit dans ledit trou (35) et capable de recevoir un pivot (40) faisant la liaison avec les organes de direction assemblés du véhicule, ledit manchon (36) étant équipé d'une projection annulaire (37) pouvant reposer sur ladite partie de paroi plane (34) et étant fixée à ladite partie de paroi au moyen d'une perle de soudure (38) obtenue par soudage au laser.
